(19) **Europäisches Patentamt**
**European Patent Office**
**Office européen des brevets**

(11) **EP 1 901 446 A1**

(12) **EUROPEAN PATENT APPLICATION**
published in accordance with Art. 153(4) EPC

(43) Date of publication:
**19.03.2008 Bulletin 2008/12**

(51) Int Cl.:
*H04B 7/26* (2006.01)      *H04B 7/08* (2006.01)
*H04B 7/10* (2006.01)      *H04J 15/00* (2006.01)
*H04Q 7/36* (2006.01)

(21) Application number: **06767618.9**

(22) Date of filing: **29.06.2006**

(86) International application number:
**PCT/JP2006/313001**

(87) International publication number:
**WO 2007/001052 (04.01.2007 Gazette 2007/01)**

(84) Designated Contracting States:
**GB**

(30) Priority: **29.06.2005 JP 2005190727**

(71) Applicants:
• **Kyocera Corporation**
  **Kyoto-shi, Kyoto-fu 612-8501 (JP)**
• **Kyushu University,**
  **National University Corporation**
  **Higashi-ku**
  **Fukuoka-shi**
  **Fukuoka 812-8581 (JP)**

(72) Inventors:
• **KIMURA, Shigeru,**
  **c/o KYOCERA CORPORATION**
  **Yokohama-shi,**
  **Kanagawa 2248502 (JP)**
• **AKAIWA, Yoshihiko,**
  **c/o KYUSHU UNIVERSITY**
  **Higashi-ku,**
  **Fukuoka-shi,**
  **Fukuoka 812858 (JP)**

(74) Representative: **Perkins, Dawn Elizabeth et al**
  **Venner Shipley LLP**
  **20 Little Britain**
  **London EC1A 7DH (GB)**

(54) **RADIO COMMUNICATION DEVICE, RADIO COMMUNICATION METHOD, AND RADIO COMMUNICATION PROGRAM**

(57)    In accordance with the present application, it is possible to determine whether or not it is appropriate to apply SDMA by estimating the fading speed of mobile stations. A wireless communication apparatus of the present application includes: a fading speed estimation portion (30) which detects phase variations of weighting coefficients of an adaptable array antenna and estimates the fading speed of the mobile stations based on the phase variations of the weighting coefficients; and a communication control portion (12) which conducts control operations so as to assign channels for SDMA based on the estimated results.

FIG. 1

**Description**

TECHNICAL FIELD

The present invention relates to a wireless communication apparatus, a wireless communication method and a wireless communication program which use SDMA (Spatial Divisional Multiple Access).
Priority is claimed on Japanese Patent Application No. 2005-190727, filed June 29, 2005, the content of which is incorporated herein by reference.

BACKGROUND ART

In a conventional technique of a mobile communication system using SDMA, when a base station determines whether or not it is appropriate to use SDMA for communicating with multiple mobile stations, the base station calculates response vectors of the mobile stations, estimates the fading speed or fading time of the mobile stations based on the response vectors, and determines whether or not SDMA is applied for communicating with the mobile stations based on the estimated fading speed (for example, see the Patent Document 1). The fading speed of the mobile station is an index for indicating a moving speed of the mobile station. If the moving speed of the mobile station is too fast, it is not possible to follow the directional pattern with regard to the mobile station, and there is a possibility to interfere with other mobile stations. Therefore, it is known that it is not appropriate to apply spatial multiplexing of such a conventional technique to multiple mobile stations at the same time (for example, see paragraph [0040] of Patent Document 1). Due to such a problem, in the past, if the fading speed was smaller than a predetermined value, SDMA was applied to the mobile stations (for example, see Claim 3 of Patent Document 1).
[Patent Document 1] Japanese Patent No. 3574055

DISCLOSURE OF INVENTION

There is a problem in the above-described conventional technique in that there is a large processing load of calculating the response vectors of the mobile station. This is because the formula for calculating the response vector is complex, and moreover, an arithmetic processing unit for calculating the formula is expensive. Furthermore, the number of operations for calculating the formula is large, and therefore, amount of electricity is also large.
Moreover, in order to calculate the response vector of the mobile station, a transmitted signal from the mobile station is used which is extracted from received signals of the base station. However, there is a possibility in which calculation of the response vector will fail if an error is included in the extracted signal.
The present invention has been conceived while taking the above-described background into account and has an object to provide a wireless communication apparatus, a wireless communication method and a wireless communication program which can determine whether or not it is appropriate to apply SDMA by estimating the fading speed of the mobile station without using the response vector of the mobile station.

DISCLOSURE OF INVENTION

In order to solve the above-described problems, a wireless communication apparatus of the present invention is characterized by including: a plurality of antenna elements; an adaptive array antenna generating directive patterns with regard to the wireless stations by generating weighting coefficients for assigning weight to each of the antenna elements; a phase variation detection unit detecting phase variations of the weighting coefficients; a fading speed estimation unit estimating the fading speed of the wireless stations based on the phasing variations of the weighting coefficients; and a communication control unit conducting control operations to assign channels for SDMA (Spatial Divisional Multiple Access) based on estimations obtained by the fading speed estimation unit.
The above-described wireless communication apparatus of the present invention is characterized by the communication control unit which assigns as many channels as possible if it is possible to simultaneously apply SDMA in descending order of the estimated results of the fading speed of the wireless stations.
A wireless communication method of the present invention for communicating with a plurality of wireless stations by using an adaptive array antenna which includes a plurality of antenna elements and generates directive patterns with regard to the wireless stations by generating weighting coefficients for assigning a weight to each of the antenna elements, is characterized by including the steps of: detecting phase variations of the weighting coefficients; estimating fading speed of the wireless stations based on the phasing variations of the weighting coefficients; and conducting control operations to assign channels for SDMA based on estimations obtained by the fading speed estimation unit.
The above-described wireless communication method of the present invention is characterized in that as many channels as possible are assigned if it is possible to simultaneously apply SDMA in a descending order of the estimated results of the fading speed of the wireless stations.

A wireless communication program of the present invention for communicating with a plurality of wireless stations by using an adaptive array antenna which includes a plurality of antenna elements and generates directive patterns with regard to the wireless stations by generating weighting coefficients for assigning a weight to each of the antenna elements, is characterized by including computer executable instructions for: detecting phase variations of the weighting coefficients; estimating the fading speed of the wireless stations based on the phasing variations of the weighting coefficients; and conducting control operations to assign channels for SDMA based on estimations obtained by the fading speed estimation unit.

The above-described wireless communication program is characterized in that as many channels as possible are assigned if it is possible to simultaneously apply SDMA in a descending order of the estimated results of the fading speed of the wireless stations.

In accordance with the above-described aspect, it is possible to realize the above-described wireless communication apparatus by using a computer.

In accordance with the above-described aspects of the present invention, it is possible to estimate the fading speed of each of the wireless stations which is the other party of a communication (such as mobile station), based on a weighting coefficient which is used for calculating the directional pattern of each of the wireless stations. Therefore, it is possible to determine whether or not it is appropriate to apply SDMA by estimating the fading speed of the mobile station without using the response vector of the mobile station. Moreover, it is possible to reduce cost and the electricity required for the arithmetic operation unit provided in the wireless communication apparatus.

BRIEF DESCRIPTION OF THE DRAWINGS

FIG. 1 is a block diagram showing a constitution of a wireless base station (wireless communication apparatus) of one embodiment of the present invention.

FIG. 2 is a block diagram showing a constitution of the fading speed estimation portion shown in FIG. 1.

FIG. 3 is a graph showing an example of data stored in a fading speed table shown in FIG. 2.

FIG. 4 is a flowchart showing a communication control operation of one embodiment of the present invention.

FIG. 5 is a block diagram showing a constitution of a wireless communication system of one embodiment of the present invention.

FIG. 6 is a drawing for explaining an example of communication control of one embodiment of the present invention.

FIG. 7 is a block diagram showing another constitution of a wireless communication system of one embodiment of the present invention.

BEST MODE FOR CARRYING OUT THE INVENTION

Hereinafter, one embodiment of the present invention is explained with reference to the drawings.

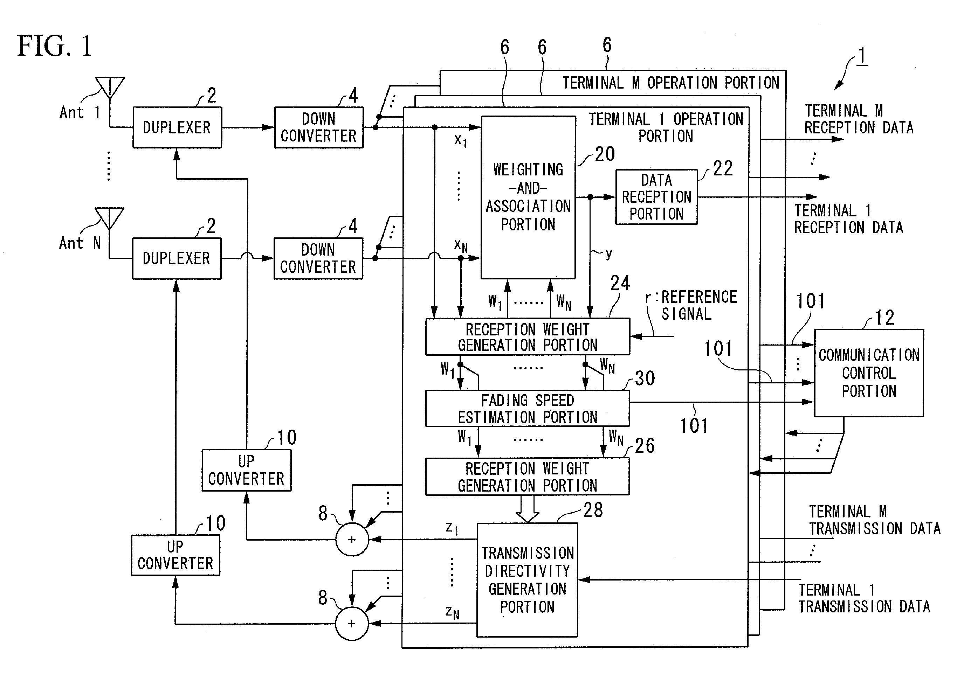

FIG. 1 is a block diagram showing a constitution of a wireless base station 1 (wireless communication apparatus) of one embodiment of the present invention. In FIG. 1, the wireless base station 1 provides an array antenna which is constituted from multiple antenna elements Ant1-AntN (N; N is an integer which is 2 or larger). A down converter 4 inputs signals which are received by the antenna elements Ant1-AntN via duplexers 2, and the inputted signals are converted to baseband signals $X_1$-$X_N$.

Each of terminal m operation portions 6 (m is an integer of 1-M) conducts wireless communication operations with regard to a corresponding wireless communication terminal (hereinafter referenced to as "terminal") which is a wireless station and is the other party of a communication. The terminal m operation portion 6 inputs the baseband signals $X_1$-$X_N$. With regard to the baseband signals $X_1$-$X_N$, the terminal m operation portion 6 conducts an adaptively receiving operation of the adaptive array antenna and outputs terminal m reception data.

Moreover, the terminal m operation portion 6 inputs terminal m transmission data. With regard to the terminal m transmission data, the terminal m operation portion 6 conducts an adaptive transmission operation of the adaptive array antenna and outputs the baseband signals $x_1$-$x_N$ corresponding to the antenna elements Ant1-AntN. The baseband signals $x_1$-$x_N$ outputted from all of the terminal m operation portions 6 are respectively assigned by adders 8 which are provided in correspondence with the antenna elements Ant1-AntN, and are outputted to an up converter 10 in order to be converted to an RF signal. The RF signals are supplied to the antenna elements Ant1-AntN via the duplexers 2 in order to be transmitted through the air.

A communication control portion 12 conducts communication operations of the wireless base station 1.

With regard to the terminal m operation portion 6, a weighting-and-association portion 20 inputs both the baseband signals $X_1$-$X_N$ and weighting coefficients $W_1$-$W_N$ which are generated by reception weight generation portion 24 and correspond to the antenna elements Ant1-AntN. The weighting-and-association portion 20 assigns weight to the

baseband signals $X_1$-$X_N$ by using the weighting coefficients $W_1$-$W_N$ and all the signals to which weight is assigned are associated in order to output an array output signal y.

A data reception portion 22 receives the array output signal y and outputs terminal m reception data.

A reception weight generation portion 24 inputs the baseband signals $x_1$-$x_N$, the array output signal y which is fed back from the weighting-and-association portion 20 and a predetermined reference signal r. The reception weight generation portion 24 calculates the weighting coefficients $W_1$-$W_N$ based on the baseband signals $x_1$-$x_N$, the reference signal r and the array output signal y. The weighting coefficients $W_1$-$W_N$ are generated such that the directional pattern of the array antenna constituted from the antenna elements Ant1-AntN follows the terminal which is the other party of a communication. An adaptive algorithm is used for calculating the weighting coefficients $W_1$-$W_N$. The adaptive algorithm is, for example, LMS (Least Mean Square) based on MMSE (Minimum Mean Square Error), RLS (Recursive Least Squares) and SMI (Sample Matrix Inversion).

A transmission weight generation portion 26 adjusts the weighting coefficients $W_1$-$W_N$ so as to be appropriate for transmission. Concretely, the transmission weight generation portion 26 adjusts dispersion with regard to both phase and gain on transmission paths from the transmission directivity generation portion 28 to the antenna elements Ant1-AntN. A transmission directivity generation portion 28 inputs the weighting coefficients which are adjusted by the transmission weight generation portion 26.

The transmission directivity generation portion 28 inputs both the weighting coefficients which are adjusted for transmission and the terminal m transmission data. The transmission directivity generation portion 28 outputs baseband signals $z_1$-$z_N$ which are obtained by assigning the adjusted weighting coefficients to the terminal m transmission data.

A fading speed estimation portion 30 inputs the weighting coefficients $W_1$-$W_N$. The fading speed estimation portion 30 estimates the fading speed of the terminal based on the weighting coefficients $W_1$-$W_N$ and outputs an estimated value 101. The communication control portion 12 inputs the estimated value 101 of the fading speed. With regard to each of the terminals, the communication control portion 12 determines whether or not it is appropriate to apply SDMA based on the estimated value 101 of the fading speed of each of the terminals.

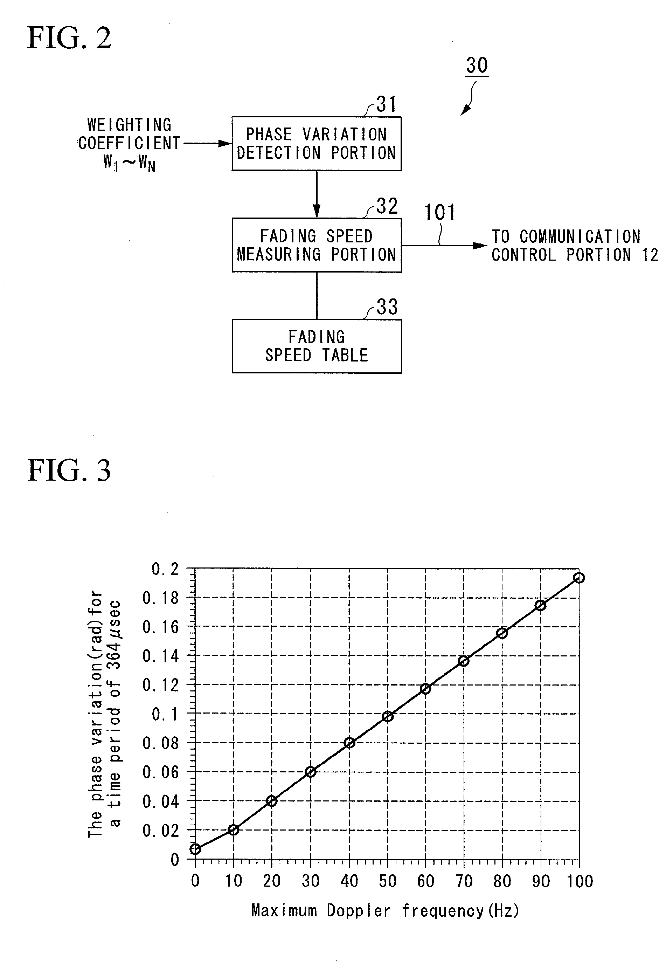

FIG. 2 is a block diagram showing a constitution of a fading speed estimation portion 30. In FIG. 2, the fading speed estimation portion 30 includes: a phase variation detection portion 31; a fading speed measuring portion 32; and a fading speed table 33.

The phase variation detection portion 31 detects phase variations of the weighting coefficients $W_1$-$W_N$. In this detection operation of phase variations, first, the phase variation detection portion 31 calculates a ratio "$h_i(n)$" between the weighting coefficients $W_i(n)$ and $W_i(n-1)$ in accordance with the following formula (1).

[Formula 1]

$$h_i(n) = \frac{W_i(n)}{W_i(n-1)} \quad i=1,\ldots,N \qquad \cdots (1)$$

It should be noted that $W_i(n)$ indicates a weighting coefficient which is generated at n-th time by the reception weight generation portion 24. Time between generation of each of the weighting coefficients is the same. Moreover, "N" is a number of the antenna elements.

Next, in accordance with a formula (2), a phase "$p_i(n)$" of $h_i(n)$ is calculated.

[Formula 2]

$$p_i(n) = \arctan\left\{\frac{\text{Im}[h_i(n)]}{\text{Re}[h_i(n)]}\right\} \quad i=1,\ldots,N \qquad \cdots (2)$$

It should be noted that $\text{Re}[h_i(n)]$ is the real part of $h_i(n)$, and $\text{Im}[h_i(n)]$ is the imaginary part of $h_i(n)$. $p(n)$ of the above-described formula is a phase variation of the weighting coefficients between $W_i(n)$ and $W_i(n-1)$.

Next, in accordance with a formula (3), an average value "$P_{avg}(n)$" of the $p_i(n)$ is calculated.
[Formula 3]

$$P_{avg}(n) = \frac{1}{N}\sum_{i=1}^{N} p_i(n) \qquad \cdots (3)$$

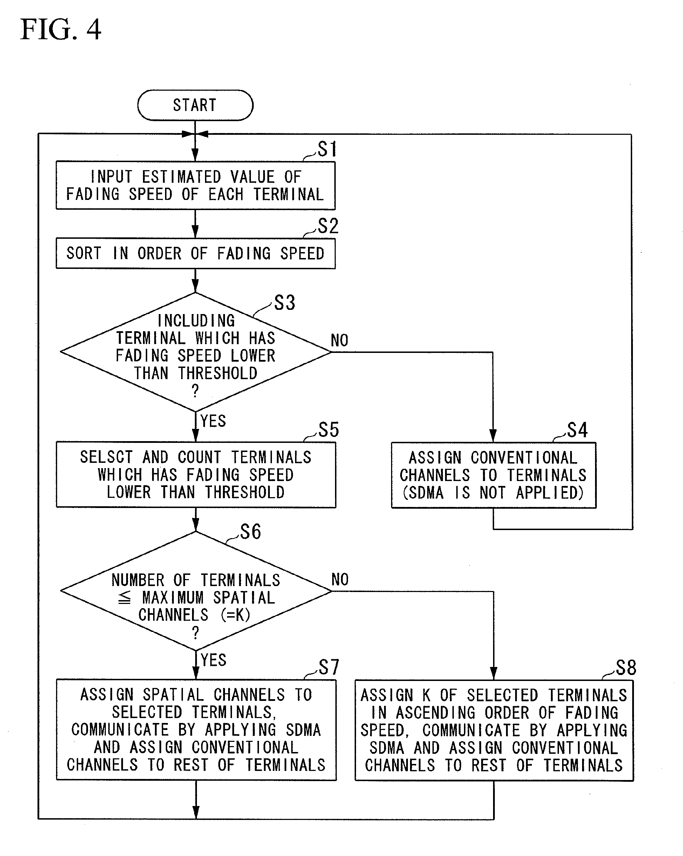

$P_{avg}(n)$ shown above indicates a variation of the phase from (n-1)-th weighting coefficients $W_1$-$W_N$ to n-th weighting coefficients $W_1$-$W_N$. The phase variation detection portion 31 outputs the phase variation calculated in accordance with the above-described formulas (1)-(3) to the fading speed measuring portion 32.
The fading speed measuring portion 32 measures a fading speed corresponding to the phase variation $P_{avg}(n)$ based on the fading speed table 33. The fading speed table 33 stores data beforehand which indicates a correspondence between the phasing variation and the fading speed. FIG. 3 is a an example of data stored in the fading speed table 33. In the graph shown in FIG. 3, the vertical axis indicates the phase variation, and the horizontal axis indicates the fading speed. Each of the wireless communication systems has its own e between the phasing variation and the fading speed. Therefore, such relationships are calculated beforehand with regard to specific wireless communication systems.
The fading speed measuring portion 32 reads the fading speed from the fading speed table 33 in correspondence with the phasing variation $P_{avg}(n)$ which has been received from the phasing variation detection portion 31. After that, the fading speed measuring portion 32 outputs the read value as the estimated value 101 to the communication control portion 12.
Next, in reference to FIG. 4, operations of the communication control portion 12 are explained. FIG. 4 is a flowchart showing communication control operations of this embodiment.
In FIG. 4, the communication control portion 12 inputs the estimated values 101 of the fading speed with regard to each of the terminals from the fading speed estimation portion 30 of each of the terminal m operation portions 6 (Step S1). Next, the estimated values 101 are sorted in an order of speed (Step S2). Next, each of the estimated values 101 is compared to a threshold Th, and it is determined whether or not the estimated value is included which is less than the threshold Th (Step S3).
Based on the detection results of Step S3, if the estimated value 101 is not included which is less than the threshold Th, the above-described communication control portion 12 assigns conventional channels to all the terminals (Step S4). Here, the conventional channel is, for example, one of a carrier (frequency) without using SDMA and a timeslot, an extended code, or a channel which is a combination of some or all of them. That is, if the estimated value 101 is less than the threshold Th (a case of "NO" in Step S3) and is not included, SDMA operations are not conducted.
On the other hand, if the estimated value 101 is included which is less than the threshold Th (a case of "YES" in Step S3), the above-described communication control portion 12 selects all the terminals corresponding to the estimated values 101 which are less than the threshold Th, and counts the selected terminals. It should be noted that the estimated value 101 includes 0. Next, the above-described communication control portion 12 compares a number obtained from selected terminals obtained by counting the selected terminals to the maximum spatial channel number "K", and determines whether or not the number from the selected terminals is the same as or less than the maximum spatial channel number "K". Here, in this embodiment, the maximum spatial channel number is the maximum number of channels which can be simultaneously used in accordance with SDMA except for a portion of conventional channels.
Based on the detection results of Step S6, if the number of selected terminals is the same or less than the maximum spatial channel number "K", the above-described communication control portion 12 assigns channels used for SDMA to all the terminals selected at Step S5, and assigns conventional channels to the rest of the terminals which are not selected at Step S5 (Step S7).
On the other hand, if the number of selected terminals is larger than the maximum spatial channel number "K" (a case of "NO" in Step S6), the communication control portion 12 extracts K of the estimated values 101 along an ascending order, and assigns the channels for SDMA to K of the terminals corresponding to the extracted estimated values 101. Moreover, the conventional channels are assigned to the rest of the terminals (including terminals which are not selected at Step S5) (Step S8).
It should be noted that, in this embodiment, the maximum spatial channel number "K" is the maximum number of channels which can be simultaneously used in accordance with SDMA except for a portion of conventional channels.

Moreover, for example, it is possible to apply a number of channels which can be simultaneously used in accordance with SDMA based on all the conventional channels. In such a case, operations of Step S8 are as follows. If the number of selected terminals is larger than the maximum spatial channel number "K" (a case of "NO" in Step S6), the communication control portion 12 extracts K of the estimated values 101 in ascending order, and assigns the channels for SDMA to K of the terminals corresponding to the extracted estimated values 101. Moreover, no channels are assigned to the rest of the terminals.

It should be noted that the above-described threshold Th is used by the above-described communication control portion 12 in order to determine whether or not it is appropriate to apply SDMA to the terminal. Each of wireless communication systems applied to the wireless base stations has its own threshold Th. Therefore, the above-described threshold Th is determined beforehand in correspondence with the wireless communication system. That is, with regard to each of the wireless communication systems applied to the wireless base stations, the upper limit of the moving speed of the terminal that is appropriate to apply spatial multiplexing is determined, and the above-described threshold Th is determined based on the fading speed corresponding to the upper limit of the moving speed.

Moreover, in order to finely conduct communication operations, it is possible to apply stepwise and multiple thresholds if necessary for the wireless communication system applied to the wireless base station. For example, the above-described communication control portion 12 provides a pair of thresholds Th and Tg such as Th < Tg. Moreover, the above-described communication control portion 12 assigns the channels for applying SDMA to the terminals corresponding to the estimated values 101 which are smaller than the threshold Th. Next, the communication control portion 12 determines whether or not terminals are included which correspond to the estimated values 101 that are the same as or larger than the threshold Th and less than the threshold Tg. If the terminals appropriate for such a condition are included, the communication control portion 12 determines whether or not there are sufficient conventional channels which are not used. Based on the determination results, if there are sufficient conventional channels which are not used, the communication control portion 12 assigns the conventional channels to the terminals corresponding to the estimated values 101 that are the same as or larger than the threshold Th and less than the threshold Tg. If there is not a sufficient number of unused conventional channels, the communication control portion 12 assigns the channels for applying SDMA to the terminals corresponding to the estimated values 101 that are the same as or larger than the threshold Th and less than the threshold Tg.

It should be noted that, in this embodiment, the communication control portion 12 compares the estimated value 101 which is the fading speed of each of the terminals to the predetermined threshold Th, and assigns the channel for applying SDMA based on the terminal which corresponds to the estimated value 101 smaller than the threshold Th. With regard to the present invention, it is not a limitation for example, to assign the spatial channels in accordance with the above-described manner. Without using the threshold Th, it is possible to simply assign the spatial channels to the terminals as much as a number of the spatial channels that can be assigned in accordance with an ascending order of the estimated values 101 of the fading speed.

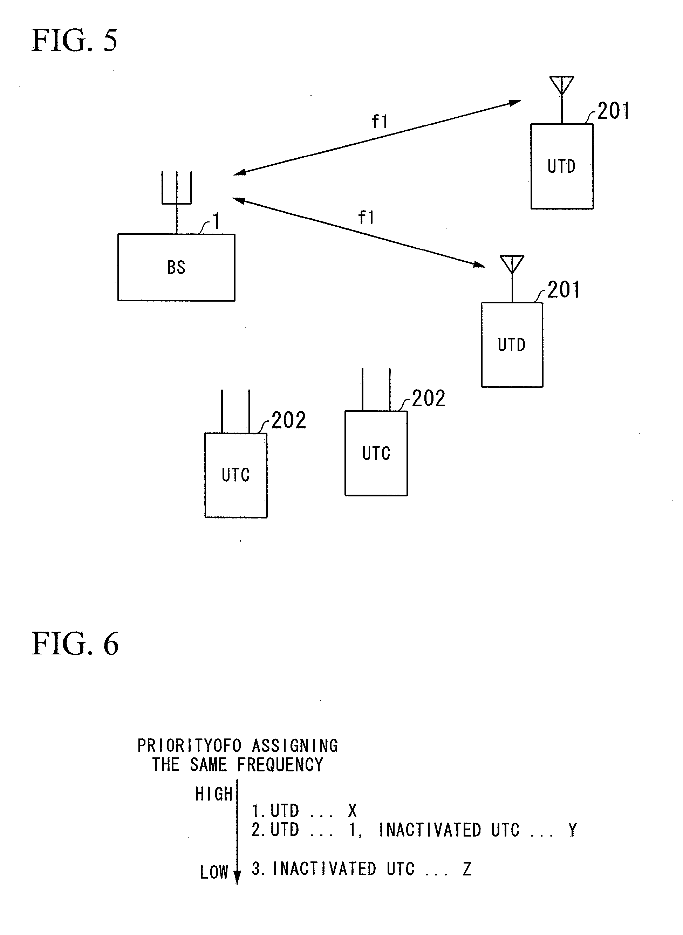

More preferably, if the communication control portion 12 detects that there are multiple terminals which are not activated or used (the estimated value 101 of the fading speed is 0) when the control portion 12 assigns channels for applying SDMA, the communication control portion 12 assigns the same channel to such terminals. For example, as shown in FIG. 5, in a case in which desktop terminals (UTD) 201 and card terminals (UTC) 202 simultaneously exist, and the communication control terminal 12 detects that the UTD 201 is not activated. In such a case, if there are multiple UTD 201 which are not activated, the communication control portion 12 assigns the same channel fl (frequency) to all of the UTD 201 which are not activated.

It should be noted that, as shown in FIG. 6, it is possible for the communication control portion 12 to provide a priority used to assign the same channel (frequency). In an example shown in FIG. 6, the more UTD detected, the higher the priority is set. By assigning the channel based on the priority as described above, it is possible for the communication control portion 12 to effectively assign the channel (frequency).

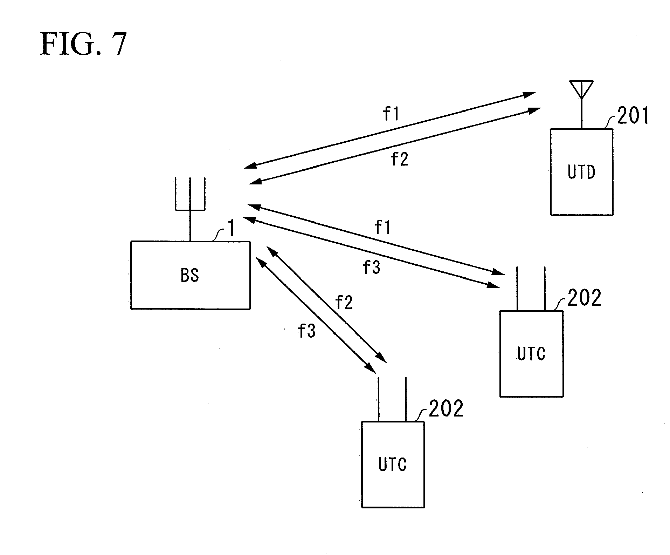

It should be noted that, as shown in FIG. 7, in a case of the wireless communication system in which multiple channels (frequency) are assigned to the same user, it is possible for the communication control portion 12 to assign the channel (frequency) multiple times.

Moreover, with regard to a program for realizing functions of the wireless base station 1 shown in FIG. 1, it is possible to store the program in a computer-readable medium, and it is possible to execute operations of the wireless communication after reading the program stored in the medium by a computer system. It should be noted that the "compute system" here preferably includes an OS and hardware such as peripheral equipment, and the like.

Moreover, the "computer system" includes an environment or conditions for providing access to (or browsing) web pages if the "computer system" uses a WWW system.

Moreover, the "computer-readable medium" is a storage device, that is, for example, a writable non-volatile memory such as a flexible disc, a magneto-optical disc, ROM and flash memory, a portable medium such as a CD-ROM, and a hard disc installed in the computer system.

Moreover, the "computer-readable medium" includes a medium which maintains the program for a certain time, that is, for example, a volatile memory inside the computer system which is a server or a client from which or to which the program is transmitted via a network such as the Internet or via a communication line such as a telephone line. Moreover, it is possible to transmit the above-described program to another computer system via a communication medium or via a transmission wave included in the transmission medium, from the computer system in which the program is stored in the storage device. Here, the "transmission medium" is a medium which has a function to transmit the information or data, that is, for example, a network (communication network) such as the Internet and a communication line (lines for communication) such as a telephone line.

Moreover, it is possible that the above-described program be provided for realizing a portion of the above-described functions. Moreover, it is possible that the above-described program be a program which can realize the above-described functions by combining with or being linked to other programs which have been stored in the computer system beforehand, that is, it is possible that the above-described program be a so-called differential file (differential program).

As described above, the embodiment of the present invention has been explained above in reference to the drawings. However, a constitution for implementing the present invention is not limited to the above-described embodiment. It is possible to modify the constitution if the modification is included in a scope of the present invention.

INDUSTRIAL APPLICABILITY

The present invention provides a wireless communication apparatus, a wireless communication method and a wireless communication program which can estimate the fading speed of each of a group of wireless stations (such as mobile stations) based on weighting coefficients for generating the directivity patterns of each of the wireless stations which are the other parties of communication.

**Claims**

1. A wireless communication apparatus communicating with a plurality of wireless stations comprising:

   a plurality of antenna elements;
   an adaptive array antenna generating directive patterns with regard to the wireless stations by generating weighting coefficients for assigning weight to a signal of each of the antenna elements;
   a phase variation detection unit detecting phase variations of the weighting coefficients;
   a fading speed estimation unit estimating a fading speed of the wireless stations based on the phasing variations of the weighting coefficients; and
   a communication control unit conducting control operations to assign channels for SDMA (Spatial Divisional Multiple Access) based on estimations obtained by the fading speed estimation unit.

2. A wireless communication apparatus according to Claim 1, wherein the communication control unit assigns as many of the channels as possible if it is possible to simultaneously apply SDMA in descending order of the estimated results of the fading speed of the wireless stations.

3. A wireless communication method for communicating with a plurality of wireless stations by using an adaptive array antenna which comprises a plurality of antenna elements and generates directive patterns with regard to the wireless stations by generating weighting coefficients for assigning weight to a signal of each of the antenna elements, comprising the steps of:

   detecting phase variations of the weighting coefficients;
   estimating a fading speed of the wireless stations based on the phasing variations of the weighting coefficients; and
   conducting control operations to assign channels for SDMA (Spatial Divisional Multiple Access) based on estimations obtained by the fading speed estimation unit.

4. A wireless communication method according to Claim 3, wherein as many of the channels as possible are assigned if it is possible to simultaneously apply SDMA in descending order of the estimated results of the fading speed of the wireless stations.

5. A wireless communication program for communicating with a plurality of wireless stations by using an adaptive array antenna which comprises a plurality of antenna elements and generates directive patterns with regard to the wireless stations by generating weighting coefficients for assigning weight to a signal of each of the antenna elements, comprising computer executable instructions for:

detecting phase variations of the weighting coefficients;
estimating a fading speed of the wireless stations based on the phasing variations of the weighting coefficients; and
conducting control operations to assign channels for SDMA (Spatial Divisional Multiple Access) based on estimations obtained by the fading speed estimation unit.

6. A wireless communication program according to Claim 5, wherein as many of the channels as possible are assigned if it is possible to simultaneously apply SDMA in a descending order of the estimated results of the fading speed of the wireless stations.

# FIG. 1

EP 1 901 446 A1

# FIG. 2

WEIGHTING COEFFICIENT W₁ ∼ Wₙ → 31 PHASE VARIATION DETECTION PORTION

→ 32 FADING SPEED MEASURING PORTION — 101 → TO COMMUNICATION CONTROL PORTION 12

33 FADING SPEED TABLE

30

# FIG. 3

The phase variation(rad) for a time period of 364 μsec

Maximum Doppler frequency(Hz)

# FIG. 4

START

S1
INPUT ESTIMATED VALUE OF
FADING SPEED OF EACH TERMINAL

S2
SORT IN ORDER OF FADING SPEED

S3
INCLUDING TERMINAL WHICH HAS FADING SPEED LOWER THAN THRESHOLD ?
NO → S4
ASSIGN CONVENTIONAL CHANNELS TO TERMINALS (SDMA IS NOT APPLIED)

YES

S5
SELSCT AND COUNT TERMINALS WHICH HAS FADING SPEED LOWER THAN THRESHOLD

S6
NUMBER OF TERMINALS ≦ MAXIMUM SPATIAL CHANNELS (=K) ?
NO → S8
ASSIGN K OF SELECTED TERMINALS IN ASCENDING ORDER OF FADING SPEED, COMMUNICATE BY APPLYING SDMA AND ASSIGN CONVENTIONAL CHANNELS TO REST OF TERMINALS

YES

S7
ASSIGN SPATIAL CHANNELS TO SELECTED TERMINALS, COMMUNICATE BY APPLYING SDMA AND ASSIGN CONVENTIONAL CHANNELS TO REST OF TERMINALS

# FIG. 5

# FIG. 6

PRIORITYOFO ASSIGNING
THE SAME FREQUENCY

HIGH

1. UTD ... X
2. UTD ... 1, INACTIVATED UTC ... Y

LOW    3. INACTIVATED UTC ... Z

FIG. 7

**INTERNATIONAL SEARCH REPORT**

| International application No. |
|---|
| PCT/JP2006/313001 |

A. CLASSIFICATION OF SUBJECT MATTER
*H04B7/26(2006.01)i, H04B7/08(2006.01)i, H04B7/10(2006.01)i, H04J15/00 (2006.01)i, H04Q7/36(2006.01)i*

According to International Patent Classification (IPC) or to both national classification and IPC

B. FIELDS SEARCHED

Minimum documentation searched (classification system followed by classification symbols)
H04B7/26, H04B7/08, H04B7/10, H04J15/00, H04Q7/36

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2003-244070 A  (Sanyo Electric Co., Ltd.), 29 August, 2003 (29.08.03), Par. No. [0092] (Family: none) | 1-6 |
| A | JP 2003-198508 A  (Sanyo Electric Co., Ltd.), 11 July, 2003 (11.07.03), Par. No. [0022] & JP 3548156 B2 | 1-6 |
| A | WO 2003/026335 A1  (Fujitsu Ltd.), 27 March, 2003 (27.03.03), Page 20, lines 3 to 13 & AU 2001/286244 A1 | 1-6 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 September, 2006 (11.09.06) | 19 September, 2006 (19.09.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**EP 1 901 446 A1**

**INTERNATIONAL SEARCH REPORT**

| International application No. |
| --- |
| PCT/JP2006/313001 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2003-032167 A (Sanyo Electric Co., Ltd.), 31 January, 2003 (31.01.03), Par. Nos. [0067] to [0069] & WO 2003/007506 A1 & EP 1418685 A1 & US 2004/176136 A1 & CN 1528060 A & AU 2002/318812 A1 | 1-6 |
| A | WO 2002/052751 A1 (Sanyo Electric Co., Ltd.), 04 July, 2002 (04.07.02), Page 15, lines 40 to 45 & EP 1351412 A1 & US 2004/053581 A1 & AU 2002/217476 A1 & TW 577200 A & CN 1426637 A | 1-6 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005190727 A
- JP 3574055 B